(19) Europäisches Patentamt
European Patent Office
Office européen des brevets

(11) **EP 4 455 167 A1**

(12) **EUROPEAN PATENT APPLICATION**

(43) Date of publication:
**30.10.2024 Bulletin 2024/44**

(21) Application number: **23206433.7**

(22) Date of filing: **27.10.2023**

(51) International Patent Classification (IPC):
**C08F 2/06** (2006.01)    **C08J 9/00** (2006.01)

(52) Cooperative Patent Classification (CPC):
(C-Sets available)
**C08J 9/00**    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.04.2023 KR 20230053838**

(71) Applicants:
- **SK Innovation Co., Ltd.**
  **Seoul 03188 (KR)**
- **SK Geo Centric Co., Ltd.**
  **Jongno-gu**
  **Seoul 03161 (KR)**

(72) Inventors:
- **NA, Sung Jae**
  **34124 Daejeon (KR)**
- **PARK, Myung Jun**
  **34124 Daejeon (KR)**
- **PARK, Hyo Seung**
  **34124 Daejeon (KR)**
- **BAEK, Jun Won**
  **34124 Daejeon (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **METHOD OF PREPARING MODIFIED PROPYLENE-BASED POLYMER AND MODIFIED PROPYLENE-BASED POLYMER PREPARED THEREBY**

(57)    The invention relates to a method of preparing a modified propylene-based polymer using a radical initiator in a solution state, and a modified propylene-based polymer prepared by the method. The modified propylene-based polymer prepared by the method has less xylene soluble content and includes a long chain branch (LCB) uniformly, leading to improved processability and productivity.

**EP 4 455 167 A1**

(52) Cooperative Patent Classification (CPC): (Cont.)

C-Sets
**C08F 255/02, C08F 212/36;**
**C08F 255/02, C08F 236/20, C08F 212/36**

## Description

### TECHNICAL FIELD

The present disclosure relates to a method of preparing a modified propylene-based polymer and a modified propylene-based polymer prepared thereby.

### BACKGROUND

Since a polypropylene (PP) polymer is composed of only carbon and hydrogen and has low density, it is easily reproduced, and may implement excellent chemical resistance and high tensile modulus even at relatively low costs. As a method for further improving the physical properties of a propylene polymer, a method of introducing a long chain branch (LCB) to the main chain of the polymer has been performed.

As a technology for adding a long chain branch to the propylene main chain, methods such as solid phase reaction, reactive extrusion, and electron beam irradiation have been reported. Meanwhile, a conventional technology using reaction extrusion often causes main chain cleavage due to a relatively high reaction temperature, thereby deteriorating physical properties.

### SUMMARY

The present invention aims to providing a method of modifying a propylene-based polymer using a radical initiator in a solution state and a modified propylene-based polymer prepared thereby.

Further, the present invention aims to providing a modified propylene-based polymer having a decreased xylene soluble content.

Yet further, the present invention aims to providing a foaming composition comprising the modified propylene-based polymer according to the above embodiment.

Against this background, the invention proposes a method of preparing a modified propylene-based polymer, which comprises: preparing a mixture comprising adding a propylene polymer, a diene compound, and a radical initiator to a solvent; and subjecting the mixture thus obtained to a radical reaction.

Further, the invention proposes a modified propylene-based polymer prepared by the preparation method according to the invention.

Yet further, the invention proposes a foaming composition, which comprises a modified propylene-based polymer according to the invention.

Preferred aspects of the invention will become apparent from the following detailed description, the drawings, and the claims.

### DETAILED DESCRIPTION OF EMBODIMENTS

Unless otherwise particularly defined in the present specification, a "polymer" refers to a molecule which has a relatively high molecular weight, and its structure may comprise multiple repetition of a unit derived from a low molecular weight. In some embodiment, the polymer may be an alternating copolymer, a block copolymer, a random copolymer, a graft copolymer, a gradient copolymer, a branched copolymer, a crosslinked copolymer, or a copolymer comprising all of them (for example, a polymer comprising more than one monomer). In another embodiment, the polymer may be a homopolymer (for example, a polymer comprising one monomer).

A "propylene-based polymer" used in the present specification is a polymer polymerized from a monomer comprising propylene. A monomer used for preparing the propylene-based polymer according to the present specification necessarily comprises propylene, but the kind of monomer which may be further used is not limited. For example, the propylene-based polymer may be a polymer polymerized from monomers comprising propylene and additional aliphatic unsaturated hydrocarbons (olefin, diene) and the like. Meanwhile, the term "propylene-based polymer" may be also referred to as "propylene polymer" depending on the choice of a person skilled in the art.

The present invention provides a method of preparing a modified propylene-based polymer (or a method of modifying a propylene-based polymer) using a radical reaction in a solution state. The method of preparing a modified propylene-based polymer has improved uniformity of the reaction by performing the method at a lower temperature than a conventional method using reactive extrusion. The modified propylene-based polymer prepared by the method according to the invention may be a long chain branched polypropylene (LCBPP) having a uniform long chain branch. In the modified propylene-based polymer according to one invention, various kinds of long chain branches are evenly distributed and a xylene soluble content is low, so that physical properties such as high melt strength, processability, and productivity may be excellently implemented.

Hereinafter, a method of preparing a modified propylene-based polymer according to the invention and a modified propylene-based polymer prepared therefrom will be described in detail.

The method comprises: preparing a mixture by adding a propylene polymer, a diene compound, and a radical initiator to a solvent; and subjecting the mixture thus prepared to a radical reaction.

In some embodiment, the step of preparing a mixture may comprise, specifically, dissolving a propylene polymer in a solvent; adding a diene compound and a radical initiator to the solution in which the propylene polymer is dissolved; and mixing.

In some embodiment, the step of preparing a mixture and/or the step of subjecting to radical reaction may be performed at 80°C to 200°C, 80°C to 180°C, 100°C to 150°C, or about 130°C. Since the temperature range shows one example, the present disclosure is not necessarily limited to the range.

In some embodiment, the step of preparing a mixture and the step of subjecting to a radical reaction may be performed under the same temperature conditions. Specifically, the step of dissolving a propylene polymer in a solvent, the step of adding a diene compound and a radical initiator and then mixing them, and the step of subjecting to a radical reaction may be all performed in the same conditions.

Since the method of preparing a modified propylene-based polymer according to one embodiment may be performed at a lower temperature than the temperature of the method of preparing a modified propylene-based polymer by conventional reactive extrusion, the economic feasibility of the reaction is improved.

In some embodiment, the propylene polymer (that is, polymer before modification) may be isotactic polypropylene (iPP), syndiotactic polypropylene (sPP), or atactic polypropylene (aPP). Without being bound by a certain theory, since an isotactic propylene polymer has excellent crystallinity, it may be more appropriate. The isotactic propylene polymer may be prepared using a Ziegler-Natta catalyst or a metallocene catalyst.

In some embodiment, the Ziegler-Natta catalyst (or Ziegler-Natta-based catalyst) may comprise transition metal compounds comprising Group 4, Group 5, or Group 6 elements of the periodic table; and organometal compounds comprising a Group 13 element of the periodic table. The transition metal compound is a main catalyst of the Ziegler-Natta catalyst and may be a compound comprising any one or more of magnesium, titanium, a halogen element, and an internal electron donor. The organometal compound is a cocatalyst of the Ziegler-Natta catalyst and may be an organoaluminum compound, and for example, may comprise any one or more of trialkyl aluminum, dialkyl aluminum halide, alkyl aluminum dihalide, aluminum dialkyl hydride, or alkyl aluminum sesquihalide. Specifically, for example, the organoaluminum compound may be $Al(C_2H_5)_3$, $Al(C_2H_5)_2H$, $Al(C_3H_7)_3$, $Al(C_3H_7)_2H$, $Al(i-C_4H_9)_2H$, $Al(C_8H_{17})_3$, $Al(C_{12}H_{25})_3$, $Al(C_2H_5)(C_{12}H_{25})_2$, $Al(i-C_4H_9)(C_{12}H_{25})_2$, $Al(i-C_4H_9)_2H$, $Al(i-C_4H_9)_3$, $(C_2H_5)_2AlCl$, $(i-C_3H_9)_2AlCl$, or $(C_2H_5)_3Al_2Cl_3$.

In addition, as the propylene polymer before modification which is added in some embodiment, a recycled propylene polymer may be used.

In some embodiment, the propylene polymer may be in a homo- or random form, and specifically, may be a homoisotactic propylene polymer or a random isotactic propylene polymer. The homo- type has high fluidity and the random type has a low melting point. Meanwhile, since the homo- or random propylene polymer often has xylene soluble (which may be understood as a content of atactic propylene polymer comprised in the isotactic polymer) of usually more than 5%, it is difficult to use the polymer commercially. Regarding this, one embodiment provides a modification method which may excellently decrease a xylene content of the propylene polymer.

In some embodiment, the solvent is a solvent for dissolving the propylene polymer, and may comprise any one or more of an aliphatic hydrocarbon compound and/or an aromatic hydrocarbon compound. For example, the aliphatic hydrocarbon compound may be a $C_{3-20}$ aliphatic hydrocarbon compound, a $C_{5-15}$ aliphatic hydrocarbon compound, or a $C_{5-10}$ aliphatic hydrocarbon compound, may be a chain or cyclic compound, and may comprise a ketone group or a hydroxyl group. Specifically, the aliphatic hydrocarbon compound may be butane, pentane, hexane, heptane, octane, nonane, decane, cyclopentane, cyclohexane, cyclopentane substituted with a $C_{1-5}$ alkyl group, or cyclohexane substituted with a $C_{1-5}$ alkyl group. The aromatic hydrocarbon compound may be, for example, a $C_{5-20}$ aromatic hydrocarbon compound, $C_{6-20}$ aromatic hydrocarbon compound, $C_{6-15}$ aromatic hydrocarbon compound, $C_{6-10}$ aromatic hydrocarbon compound, or $C_{6-8}$ aromatic hydrocarbon compound, and the aromatic hydrocarbon compound may be a substituted or unsubstituted compound. Specifically, the aromatic hydrocarbon compound may be benzene, toluene, xylene, cresol, anisole, catechol, naphthalene, styrene, aniline, or xylenol.

In some embodiment, the diene compound may be added at 0.1 wt% to 20.0 wt%, 0.5 wt% to 15.0 wt%, 1.0 wt% to 20.0 wt%, 1.0 wt% to 15.0 wt%, 2.0 wt% to 15.0 wt%, 3.0 wt% to 15.0 wt%, 3.0 wt% to 13.0 wt%, 5.0 wt% to 20.0 wt%, 5.0 wt% to 15.0 wt%, or 5.0 wt% to 10.0 wt%, based on the weight of the added propylene polymer (that is, when the weight of the propylene polymer is 100 wt%). However, the weight range is only an example, and the present disclosure is not necessarily limited thereto.

In some embodiment, the radical initiator may be added at 0.1 wt% to 5.0 wt%, 0.1 wt% to 3.0 wt%, 0.1 wt% to 2.0 wt%, 0.1 wt% to 1.0 wt%, 0.3 wt% to 1.2 wt%, or about 0.5 wt%, based on the weight of the added propylene polymer. However, the weight range is only an example, and the present disclosure is not necessarily limited thereto.

In some embodiment, a weight ratio between the radical initiator and the diene compound may be 1:1 to 1:50, 1:1 to 1:30, 1:1 to 1:20, 1:2 to 1:20, 1:5 to 1:20, 1:8 to 1:20, or 1:10 to 1:20. However, the weight range is only an example, and the present disclosure is not necessarily limited thereto.

The diene compound according to one embodiment is not particularly limited as long as it is a compound comprising two double bonds, and may be, for example, a compound comprising 2 to 20 carbon atoms, 5 to 10 carbon atoms, 5 to 15 carbon atoms, or 5 to 10 carbon atoms. Specifically, for example, the compound may comprise any one or more of 1,3-butadiene, 1,4-pentadiene, 1,5-hexadiene, 1,6-heptadiene, 1,7-octadiene, 1,8-nonadiene, 1,9-decadiene, 1,10-undecadiene, 1,11-dodecadiene, 1,12-tridecadiene, 1,13-tetradecadiene, chloroprene, cyclohexadiene, cyclopentadiene, 2,3-dimethylbutadiene, isoprene, o-divinylbenzene, m-divinylbenzene, and p-divinylbenzene. As an example, divinylbenzene (DVB) used in the following example is a mixture of m-DVB and p-DVB.

As the radical initiator according to one embodiment, the known radical initiator may be used without limitation, and may comprise for example, any one or more selected from the group consisting of acyl peroxide, alkyl peroxide, hydroperoxide, perester, and peroxycarbonate.

The acyl peroxide may be, for example, benzoyl peroxide, 4-chlorobenzoyl peroxide, 3-methoxybenzoyl peroxide, and/or methyl benzoyl peroxide.

The alkyl peroxide may be, for example, allyl t-butyl peroxide, 2,2-bis(t-butylperoxybutane), 1,1-bis(t-butylperoxy)-3,3,5-trimethylcyclohexane, n-butyl-4,4-bis(t-butylperoxy)valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1-di(t-amylperoxy)cyclohexane, t-amyl peroxide, t-butylcumyl peroxide, t-butyl peroxide, and/or 1-hydroxybutyl n-butyl peroxide.

The perester and the peroxydcarbonate may be, for example, butyl peracetate, cumyl peracetate, cumyl perpropionate, cyclohexyl peracetate, di-t-butyl peradipate, di-t-butyl perazelate, di-t-butyl perglutarate, di-t-butyl perthalate, di-t-butyl percebacate, 4-nitrocumyl perpropionate, 1-phenylethyl peroxybenzoate, 1-phenylethyl 4-nitro-peroxybenzoate, t-butylbicyclo-(2,2,1)heptane peroxycarboxylate, t-butyl-4-carbomethoxy peroxybutyrate, t-butylcyclobutane peroxycarboxylate, t-butylcyclohexyl peroxycarboxylate, t-butylcyclopentyl peroxycarboxylate, t-butylcyclopropane peroxycarboxylate, t-butyldimethyl percinnamate, t-butyl-2-(2,2-diphenylvinyl)peroxybenzoate, t-butyl-4-methoxy peroxybenzoate, t-butyl peroxybenzoate, t-butyl peroxyisopropylcarbonate, t-butyl pertoluate, t-butyl-1-phenylcyclopropyl peroxycarboxylate, t-butyl-2-propylperpenten-2-oate, t-butyl-1-methylcyclopropyl peroxycarboxylate, t-butyl-4-nitrophenyl peracetate, t-butylnitrophenyl peroxycarbanate, t-butyl-N-succiimido peroxycarboxylate, t-butyl perchrotonate, t-butyl permaleic acid, t-butyl permethacrylate, t-butyl peroctoate, t-butyl peroxyisopropylcarbonate, t-butyl perisobutyrate, t-butyl peracrylate, and/or t-butyl perpropionate.

The modified propylene-based polymer prepared by the method according to one embodiment may comprise 2.0 wt% or less, 1.5 wt% or less, 1.0 wt% or less, 0.8 wt% or less, 0.7 wt% or less, 0.5 wt% or less, 0.3 wt% or less, or 0.1 wt% or less of xylene solubles (XS). Herein, the lower limit may be, for example, 0.1 wt%, 0.05 wt%, or 0.01 wt%. The xylene soluble refers to a soluble part in cold xylene of the constituents comprised in the polymer, and may be measured by dissolving a polymer in xylene and then crystallizing an insoluble part (residue) from a cooling solution. Specifically, the xylene soluble may be calculated from the following Equation 1:

$$[\text{Equation 1}]$$

$$\text{Xylene soluble (XS, \% (wt\%))} = \{(m_0 - m_1) / m_0\} \times 100$$

wherein $m_0$ is an initial weight (g) of a polymer, and $m_1$ is a weight (g) of a residue. The xylene soluble comprises a polymer chain having low stereoregularity, and may be an indicator of an amount of a non-crystalline region.

The modified propylene-based polymer prepared by the preparation method according to one embodiment has a significantly decreased xylene soluble, thereby having excellently improved processability and productivity.

The modified propylene-based polymer prepared according to the invention may be a multi-branched propylene-based polymer. That is, a propylene backbone (main chain) may have many side chains, and some of the side chains may further have additional side chains themselves.

In addition, the modified propylene-based polymer according to one embodiment may be a long chain branched polypropylene (LCBPP). The modified polymer according to one embodiment has a long chain branch, so that rheological properties such as flow, shear, and extension may be excellent.

When the modified propylene-based polymer according to one embodiment is analyzed using gel permeation chromatography, its molecular distribution may be as broad as or broader than that of commercially available LCBPP. That is, the modified propylene-based polymer according to one embodiment is distributed as being not separated from each other but homogeneous.

The modified propylene-based polymer according to one embodiment may comprise a xylene soluble (XS) at 2.0 wt% or less, 1.5 wt% or less, 1.0 wt% or less, 0.8 wt% or less, 0.7 wt% or less, 0.5 wt% or less, 0.3 wt% or less, or 0.1 wt% or less, as calculated according to Equation 1.

Since the modified propylene-based polymer according to one embodiment has high melt strength, it may be applied variously to a blown film, extrusion coating, foam extrusion, blow molding, and the like. In addition, due to its high melt strength, processability, productivity, and the like may be much improved, and due to the increased melt strength at a high temperature, foam molding at a high temperature is allowed. In addition, since the modified propylene-based polymer may be recycled, it is useful as an environmentally friendly lightweight material.

The modified propylene-based polymer according to one embodiment has high melt strength and excellent physical properties, and thus, may be used in manufacture of foaming articles such as a laminated or non-laminated sheet, beads, and a demolding material. Besides, the modified propylene-based polymer according to one embodiment is used to form an article by thermoforming, injection molding, blow molding, extrusion coating, or melting. In addition, the modified propylene-based polymer according to one embodiment may be effectively applied to various fields such as adhesives, films, and packaging materials.

The modified propylene-based polymer according to the invention has a significantly decreased xylene soluble content (calculated according to Equation 1), and thus, has excellent physical properties, specifically excellent productivity and processability.

The modified propylene-based polymer according to one embodiment may comprise 1.5 wt% or less, 1.0 wt% or less, 0.8 wt% or less, 0.7 wt% or less, 0.5 wt% or less, 0.3 wt% or less, or 0.1 wt% or less of the xylene soluble. Herein, the lower limit may be, for example, 0.1 wt%, 0.05 wt%, or 0.01 wt%.

The modified propylene-based polymer according to one embodiment may have a crystallization temperature (Tc) of 110°C to 124°C as measured according to DSC measurement conditions according to the following experimental examples. Otherwise, the crystallization temperature may be 110°C to 120°C or 110°C to 118°C.

The modified propylene-based polymer according to one embodiment may have a number average molecular weight (Mn) of 60,000 g/mol to 110,000 g/mol as measured according to the GPC measurement conditions according to the following experimental examples. Otherwise, the number average molecular weight may be 70,000 g/mol to 110,000 g/mol. When reference is made herein to number average molecular weight (Mn), it refers to the property as determined by GPC using a PS calibration standard.

The modified propylene-based polymer according to one embodiment may have a strain hardening index (SHI) of 0.2 or more, 0.3 or more, 0.5 or more, 1.0 or more, 1.5 or more, 1.8 or more, or 1.9 or more as measured in ranges of a Hencky rate ($d\varepsilon/dt$) of 1.0 s$^{-1}$ and a Hencky strain ($\varepsilon$) of 1 to 3 at 180°C. Herein, the upper limit may be, for example, 5.0, 4.0, 3.0, or 2.74.

The strain hardening index is defined as a gradient value (c2) of a common log function (log($\varepsilon$)) of Hencky strain defined by the following Equation 2:

$$[\text{Equation 2}]$$

$$\eta_E = c1 \times \varepsilon^{c2}$$

wherein $\eta_E$ is an elongation viscosity (Pa·s), $\varepsilon$ is Hencky strain, and c1 and c2 are parameters. The properties as referred to herein are as measured in US 8,153,745 B2.

The propylene-based polymer according to one embodiment shows an excellent strain hardening index which is equal to or higher than a conventionally developed product, and it is recognized therefrom that the modified propylene-based polymer according to one embodiment comprises various long chain branches. Therefore, when the propylene-based polymer according to one embodiment is used, a stable state may be effectively maintained during processing.

The modified propylene-based polymer according to one embodiment may be prepared by copolymerizing a diene comonomer, or the above description of the diene compound may be applied.

A foaming composition according to the invention comprises the modified propylene-based polymer according to the invention and a foam molded body formed using the composition, and the use of the molded body is not particularly limited.

Hereinafter, the examples and the experimental examples will be illustrated in detail.

**<Example 1>**

15 g of a propylene polymer (isotactic polypropylene, iPP) and a magnetic bar were put into a 500 mL 3-neck round bottom flask, 300 mL of an n-octane solvent was added thereto, and a reflux was performed with nitrogen gas at 120°C. After the propylene polymer was all dissolved, 1.0 wt% of octadiene and 1.0 wt% of DVB (Sigma-Aldrich) as a diene monomer, and 0.5 wt% of TBPB as a radical initiator were added, and stirring was performed at the same temperature for 1 hour. It was cooled down to room temperature, washed with acetone, and filtered and dried to obtain a modified propylene-based polymer.

**<Examples 2 to 7>**

Propylene polymers were modified in the same manner as in Example 1, except that the solvent, the radical initiator, and the diene as listed in the following Table 1 were used.

[Table 1]

| Example No. | Solvent | Radical initiator | | Diene | |
|---|---|---|---|---|---|
| | | Type | Content (wt%) | Type | Content (wt%) |
| 1 | Octane | TBPB | 0.5 | 1.7-octadiene/DVB | 1.0/1.0 |
| 2 | Xylene | TBPB | 0.5 | DVB | 2.0 |
| 3 | Xylene | LP | 0.5 | DVB | 2.0 |
| 4 | Xylene | TBPB | 0.5 | DVB | 0.5 |
| 5 | Xylene | TBPB | 0.5 | DVB | 5.0 |
| 6 | Octane | TBPB | 0.5 | DVB | 5.0 |
| 7 | Xylene | TBPB | 0.5 | DVB | 10.0 |
| (wt% was based on the weight of the propylene polymer)<br>TBPB: t-butyl peroxybenzoate<br>LP: lauroyl peroxide<br>DVB: divinylbenzene | | | | | |

**<Comparative Example 1>**

The propylene polymer before modification (isotactic polypropylene, iPP) which was used in Example 1 was prepared.

**<Comparative Example 2>**

WB140HMS (available from Borealis) which is a high melt strength propylene polymer (HMSPP) was prepared. WB140HMS is a product manufactured by reactive extrusion.

**<Experimental Example 1> Measurement of xylene soluble (XS) content**

A xylene soluble content was measured using Crystex. Specifically, it was measured by dissolving a modified propylene-based polymer in xylene, and then crystallizing an insoluble part (residue) from a cooling solution. The xylene soluble content was calculated by the following Equation 1. The results are shown in the following Table 2:

$$[\text{Equation 1}]$$

$$\text{Xylene soluble (XS, \% (wt\%))} = \{(m_0 - m_1) \ / \ m_0\} \times 100$$

wherein $m_0$ is an initial weight (g) of a polymer, and $m_1$ is a weight (g) of a residue.

**<Experimental Example 2> Differential scanning calorimetry (DSC) analysis**

Differential scanning calorimetry (DSC) was used to measure a crystalline temperature (Tc) and a melting temperature (Tm) of the polymer. A polymer specimen was prepared by pressing it with a crimper press for DSC analysis, and was analyzed at a temperature of -50°C to 200°C and a heating rate of 10°C/min. The results are shown in the following Table 2.

**<Experimental Example 3> Gel permeation chromatography (GPC) analysis**

Gel permeation chromatography (GPC) was used to confirm a molecular weight distribution of the polymer, and the results are shown in the following Table 2. For GPC analysis, Polymer Char GPC-IR equipment was used (standard sample: Easical PS1 Polystyrene, temperature: 160°C, solvent: 1,2,4-Trichlorobenzene, viscosity constant: K, $\alpha$ of polypropylene). About 1.5 mg of the polymer sample was placed to a 1.25 mL high temperature GPC vial, 1 mL of 1,2,4-trichlorobenzene (w/BHT) was added thereto, dissolution was performed for 3 hours or more with stirring at 150°C, and the solution was used for analysis.

**<Experimental Example 4> Elongation viscosity analysis**

In order to confirm the strain hardening properties of the polymer, elongation viscosity over time was measured. The measurement for elongation viscosity analysis was performed by using a strain-controlled rheometer (ARES) available from TA, preparing a polymer as a specimen having a thickness of 8 mm and a width of 10.2 mm under the conditions of 180°C and a strain rate of 1.0 s$^{-1}$, and setting a final Hencky strain to 3.5.
In order to numerically confirm the strain hardening properties of the polymer, a strain hardening index (SHI) defined as a gradient value (c2) of a common log ($\log(\varepsilon)$) function of a Hencky strain ($\varepsilon$) defined by the following Equation 2 was calculated, and the results are shown in the following Table 2:

$$[\text{Equation 2}]$$

$$\eta_E = c1 \times \varepsilon^{c2}$$

wherein $\eta_E$ is an elongation viscosity (Pa·s) measured at a Hencky rate (d$\varepsilon$/dt) of 1.0 s$^{-1}$ at 180°C, the measurement being performed in a Hencky strain ($\varepsilon$) range of 1 to 3, and c1 and c2 are parameters. The parameters c1 and c2 were confirmed by floating a log function of the Hencky strain ($\log(\eta_E) = c2 \times \log(\varepsilon) + \log(c1)$) and applying a least square method to linear fit the data.

[Table 2]

|  | XS (wt%) | Tc (°C) | Tm (°C) | Mn (kg/mol) | Mw (kg/mol) | MWD | SHI |
|---|---|---|---|---|---|---|---|
| Example 1 | 0.52 | 112.58 | 159.85 | 72.2 | 371.0 | 5.13 | 0.76 |
| Example 2 | 0.07 | 118.60 | 161.17 | 86.0 | 398.0 | 4.63 | 0.47 |
| Example 3 | 0.79 | 116.57 | 164.67 | 89.2 | 453.0 | 5.08 | 0.50 |
| Example 4 | 0.26 | 117.69 | 167.92 | 77.1 | 385.0 | 4.99 | 0.21 |
| Example 5 | 0.62 | 118.57 | 164.09 | 87.5 | 390.0 | 4.46 | 1.97 |
| Example 6 | 0.43 | 117.02 | 166.31 | 77.8 | 429.0 | 5.51 | 2.56 |
| Example 7 | 0.08 | 116.50 | 165.02 | 106.0 | 413.0 | 3.89 | 2.74 |
| Comparative Example 1 | 3.2 | 110.94 | 160.89 | 129.0 | 471.0 | 3.64 | 0.26 |
| Comparative Example 2 | 2.5 | 124.50 | 161.50 | 71.7 | 421.0 | 5.86 | 2.75 |

From the above experiments, it was found that all of the modified propylene-based polymers prepared by the method according to the examples had a xylene soluble content of about 1.0 wt% or less which is significantly lower than that of the comparative examples, and thus, it was confirmed that a polymer having excellent crystallinity, being resistant to heat, and having excellent mechanical strength may be prepared by modification of the polymers according to the examples.
In addition, the propylene-based polymer modified by the method according to the examples showed a molecular weight distribution as broad as that of a commercially available propylene-based polymer (Comparative Example 2), and thus, it was found that the polymers were not separated, were homogeneously distributed, and had a high distribution.
In addition, it was confirmed that the propylene-based polymer modified by the method according to the examples showed a strain hardening index which is similar to that of the commercially available propylene-based polymer (Comparative Example 2) and better than that of the propylene-based polymer of Comparative Example 1. Thus, it was confirmed that a polymer which has excellent strain hardening properties and may effectively maintain a stable state during processing may be prepared.

To summarize, the present invention provides a method of preparing a modified propylene-based polymer using a radical initiator in a solution state, and a modified propylene-based polymer prepared by the method. Since the modified propylene-based polymer prepared by the method according to the invention has less xylene soluble content and comprises a long chain branch (LCB) uniformly, it may have improved processability and productivity.

**Claims**

1. A method of preparing a modified propylene-based polymer, the method comprising:

   preparing a mixture comprising adding a propylene polymer, a diene compound, and a radical initiator to a solvent; and
   subjecting the mixture thus prepared to a radical reaction.

2. The method of claim 1, wherein the preparing of a mixture comprises:

   dissolving the propylene polymer in the solvent;
   adding the diene compound and the radical initiator; and
   mixing.

3. The method of any preceding claim, wherein the preparing of a mixture and the subjecting to a radical reaction are performed at a temperature of 80°C to 200°C.

4. The method of any preceding claim, wherein the solvent comprises any one or more of aliphatic hydrocarbon compounds, preferably a $C_{3-20}$ aliphatic hydrocarbon compounds, and aromatic hydrocarbon compounds, preferably $C_{5-20}$ aromatic hydrocarbon compounds.

5. The method of any preceding claim, wherein the diene compound is added at 0.1 wt% to 20.0 wt%, preferably 5.0 wt% to 15.0 wt% based on the weight of the added propylene polymer.

6. The method of any preceding claim, wherein a weight ratio between the radical initiator and the diene compound is 1:1 to 1:50.

7. The method of any preceding claim, wherein the radical initiator is added at 0.1 wt% to 5.0 wt% based on the weight of the added propylene polymer.

8. The method of any preceding claim, wherein the radical initiator includes any one or more selected from the group consisting of acyl peroxide, alkyl peroxide, hydroperoxide, perester, and peroxycarbonate.

9. The method of any preceding claim, wherein the diene compound is a compound comprising 2 to 20 carbon atoms, and preferably includes any one or more selected from the group consisting of 1,3-butadiene, 1,4-pentadiene, 1,5-hexadiene, 1,6-heptadiene, 1,7-octadiene, 1,8-nonadiene, 1,9-decadiene, 1,10-undecadiene, 1,11-dodecadiene, 1,12-tridecadiene, 1,13-tetradecadiene, chloroprene, cyclohexadiene, cyclopentadiene, 2,3-dimethylbutadiene, isoprene, o-divinylbenzene, m-divinylbenzene, and p-divinylbenzene.

10. A modified propylene-based polymer prepared by the method according to any preceding claim.

11. The polymer of claim 10, having 2.0 wt% or less of a xylene soluble.

12. A modified propylene-based polymer having a xylene soluble content of 2.0 wt% or less.

13. The polymer of any one of claims 10 to 12, having a crystallization temperature (Tc) of 110°C to 124°C, and/or wherein the modified propylene-based polymer has a number average molecular weight (Mn) of 60,000 g/mol to 110,000 g/mol as determined by GPC using a PS calibration standard..

14. The polymer of any one of claims 10 to 13, having a strain hardening index (SHI) of 0.2 or more as measured, in agreement with the method as in the description, in ranges of a Hencky rate ($d\varepsilon/dt$) of 1.0 s$^{-1}$ and a Hencky strain

($\varepsilon$) of 1 to 3 at 180°C, the strain hardening index being defined as a gradient value (c2) of a common log (log($\varepsilon$)) function of the Hencky strain defined by the following Equation 2:

$$[\text{Equation 2}]$$

$$\eta_E = c1 \times \varepsilon^{c2}$$

wherein $\eta_E$ is an elongation viscosity (Pa·s), $\varepsilon$ is Hencky strain, and c1 and c2 are parameters.

15. A foaming composition comprising the modified propylene-based polymer according to any one of claims 10 to 14.

Europäisches
Patentamt

European
Patent Office

Office européen
des brevets

# EUROPEAN SEARCH REPORT

Application Number

EP 23 20 6433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/361543 A1 (BERGMAN NICKE [SE] ET AL) 21 December 2017 (2017-12-21) | 10 | INV. C08F2/06 C08J9/00 |
| Y | * paragraph [0012] - paragraph [0053]; claims 1-17; examples 1-8 * | 1-15 | |
| X | EP 3 018 155 A1 (BOREALIS AG [AT]) 11 May 2016 (2016-05-11) * paragraph [0064] - paragraph [0066]; claim 7; examples IE1-IE6; table 3 * * paragraph [0162] * | 10,15 | |
| X | US 5 902 858 A (OKURA TETSUO [JP] ET AL) 11 May 1999 (1999-05-11) | 10,15 | |
| Y | * claims 1-7; examples 1-14 * | 1-15 | |
| Y | WO 02/34801 A1 (EASTMAN CHEM CO [US]) 2 May 2002 (2002-05-02) * claim 1; example 1 * | 1-15 | |

TECHNICAL FIELDS
SEARCHED      (IPC)

C08J
C08F

The present search report has been drawn up for all claims

| Place of search | Date of completion of the search | Examiner |
|---|---|---|
| The Hague | 17 April 2024 | Giani, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 6433

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2024

| Patent document cited in search report | | Publication date | Patent family member(s) | | Publication date |
|---|---|---|---|---|---|
| US 2017361543 | A1 | 21-12-2017 | BR 112017015146 | A2 | 23-01-2018 |
| | | | CN 107848222 | A | 27-03-2018 |
| | | | EP 3253561 | A1 | 13-12-2017 |
| | | | JP 6328348 | B2 | 23-05-2018 |
| | | | JP 2018504486 | A | 15-02-2018 |
| | | | KR 20170103945 | A | 13-09-2017 |
| | | | TW 201630953 | A | 01-09-2016 |
| | | | US 2017361543 | A1 | 21-12-2017 |
| | | | WO 2016124617 | A1 | 11-08-2016 |
| EP 3018155 | A1 | 11-05-2016 | BR 112017008066 | A2 | 23-01-2018 |
| | | | CN 107109005 | A | 29-08-2017 |
| | | | EP 3018155 | A1 | 11-05-2016 |
| | | | EP 3018156 | A1 | 11-05-2016 |
| | | | JP 6316502 | B2 | 25-04-2018 |
| | | | JP 2017532415 | A | 02-11-2017 |
| | | | KR 20170062539 | A | 07-06-2017 |
| | | | TW 201620975 | A | 16-06-2016 |
| | | | TW 201623406 | A | 01-07-2016 |
| | | | US 2017313797 | A1 | 02-11-2017 |
| | | | WO 2016071396 | A1 | 12-05-2016 |
| | | | WO 2016071400 | A1 | 12-05-2016 |
| US 5902858 | A | 11-05-1999 | CA 2242611 | A1 | 17-07-1997 |
| | | | DE 69726557 | T2 | 30-09-2004 |
| | | | EP 0874009 | A1 | 28-10-1998 |
| | | | KR 19990028663 | A | 15-04-1999 |
| | | | MY 118232 | A | 30-09-2004 |
| | | | US 5902858 | A | 11-05-1999 |
| | | | WO 9725356 | A1 | 17-07-1997 |
| WO 0234801 | A1 | 02-05-2002 | AU 1436501 | A | 06-05-2002 |
| | | | WO 0234801 | A1 | 02-05-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8153745 B2